(19) Europäisches Patentamt
European Patent Office
Office européen des brevets

(11) EP 0 571 245 B1

(12) FASCICULE DE BREVET EUROPEEN

(45) Date de publication et mention de la délivrance du brevet:
**15.07.1998 Bulletin 1998/29**

(21) Numéro de dépôt: **93401211.3**

(22) Date de dépôt: **12.05.1993**

(51) Int Cl.⁶: **C11D 7/52**, C09K 3/18, B01F 17/18 // C03C23/00, C23G5/028,(C11D7/52, 1:62)

# (54) Procédé de préparation de compositions pour le démouillage ou le dégraissage de surfaces solides

Verfahren zur Herstellung von Zusammensetzungen zum Entfeuchten oder Entfetten der Oberflächen von Festkörpern

Process for preparing compositions for demoistening or degreasing of solid surfaces

(84) Etats contractants désignés:
**AT BE CH DE ES FR GB IE IT LI NL**

(30) Priorité: **21.05.1992 FR 9206201**

(43) Date de publication de la demande:
**24.11.1993 Bulletin 1993/47**

(73) Titulaire: **ELF ATOCHEM S.A.**
**92800 Puteaux, Hauts-de-Seine (FR)**

(72) Inventeurs:
- **Bil, Martine**
  **F-59491 Villeneuve d'Asq (FR)**
- **Boussaguet, Jean-Charles**
  **F-78410 Aubergenville (FR)**
- **Desbiendras, Daniel**
  **F-93430 Villetaneuse (FR)**
- **Fouquay, Stéphane**
  **F-76130 Mont Saint-Aignan (FR)**
- **Michaud, Pascal**
  **F-95210 Saint-Gratien (FR)**

(74) Mandataire: **Leboulenger, Jean et al**
**Elf Atochem S.A.,**
**Département Propriété Industrielle,**
**Cedex 42 - La Défense 10**
**92091 Paris la Défense (FR)**

(56) Documents cités:
**WO-A-86/00329**
**FR-A- 1 541 592**
**FR-A- 2 522 007**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 571 245 B1

## Description

La présente invention concerne le domaine du traitement des surfaces et a plus particulièrement pour objet un nouveau procédé de préparation de compositions utiles pour éliminer l'eau ou les graisses se trouvant à la surface de divers substrats tels que, par exemple, articles métalliques, verre et matières plastiques.

Des dispositifs et compositions pour le démouillage en continu des surfaces sont déjà connus et ont été décrits, par exemple, dans les brevets FR 1 541 592, FR 2 229 308 et US 4 182 687. Ce dernier décrit notamment une composition de démouillage constituée d'un chlorofluorocarbure, principalement le 1,1,2-trichloro1,2,2-trifluoroéthane, contenant un mono- ou dialkylphosphate d'ammonium quaternaire comme agent tensio-actif. Cet agent tensio-actif peut être formé in situ par réaction d'un acide mono- ou dialkylphosphorique, d'un chlorure d'ammonium quaternaire et d'une alkylamine au sein du chlorofluorocarbure.

Dans un procédé de séchage en continu qui implique la séparation de l'eau entraînée avant le recyclage de la composition de démouillage, il est souhaitable que l'émulsion formée par la composition de démouillage avec l'eau extraite se sépare rapidement en deux phases pour permettre l'élimination de la couche aqueuse avant de recycler la composition de démouillage.

Pour améliorer la vitesse de désémulsionnement des compositions de démouillage à base de mono- ou dialkylphosphate d'ammonium quaternaire, il a été préconisé dans le brevet FR 2 522 007 de remplacer l'alkylamine du brevet US 4 182 687 par une amine fluorée de formule générale :

$R^1$
/
$R_F$-X-N (I)
\
$R^2$

dans laquelle $R_F$ représente un radical perfluoroalkyle, linéaire ou ramifié, contenant de 2 à 20 atomes de carbone, X désigne un groupe de liaison bivalent éventuellement partiellement halogéné, et les symboles $R^1$ et $R^2$, identiques ou différents, représentent chacun un atome d'hydrogène ou un radical alkyle ou hydroxyalkyle contenant 1 à 4 atomes de carbone. L'addition d'un acide carboxylique à ces compositions de démouillage permet, selon la demande de brevet WO 86/00329, d'améliorer encore la vitesse de séparation des phases aqueuse et organique.

Les compositions de démouillage du brevet français précité sont préparées en mélangeant, au sein du solvant chlorofluorocarbure, un acide mono-ou dialkyl-phosphorique de formule générale :

$$(RO)_p(HO)_{2-p}PO_2H \qquad (II)$$

dans laquelle p est un nombre allant de 1 à 2 et R désigne un radical alkyle, linéaire ou ramifié, contenant de 1 à 18 atomes de carbone, un chlorure d'ammonium quaternaire de formule générale :

$$R'_2N^{\oplus}R''_2\ Cl^{\ominus} \qquad (III)$$

dans laquelle R' désigne un radical alkyle, linéaire ou ramifié, contenant de 6 à 18 atomes de carbone et R" est un radical méthyle ou éthyle, et une amine fluorée de formule (I) ci-dessus. Ce mode de préparation conduit à la formation d'un précipité de chlorhydrate d'amine fluorée qu'il est souhaitable d'éliminer par filtration pour obtenir une composition de démouillage parfaitement homogène.

Il a maintenant été trouvé qu'on peut encore diminuer considérablement le temps de désémulsionnement et accélérer ainsi la séparation des phases aqueuse et organique en remplaçant une fraction de l'amine fluorée par une base alcaline et en introduisant en dernier le chlorure d'ammonium quaternaire de formule (III). Ceci permet en outre d'éviter une précipitation, même partielle, de chlorhydrate d'amine fluorée.

L'invention a donc principalement pour objet la préparation d'une composition de démouillage constituée essentiellement d'une solution de matière tensio-active dans au moins un solvant aliphatique halogéné liquide à température ambiante et ayant un point d'ébullition n'excédant pas 87°C, caractérisée en ce que le procédé consiste à faire réagir, au sein du solvant aliphatique halogéné ou d'un mélange de tels solvants, une mole d'acide mono- ou dialkylphosphorique (II) avec 0,5 à 0,7 mole d'amine fluorée (I), 0,5 à 0,3 mole d'une base alcaline et 0,3 à 1 mole d'un chlorure

d'ammonium quaternaire (III), en proportions telles que le rapport molaire : (amine I + base alcaline)/acide II soit égal à 1, que la quantité molaire de chlorure III soit au moins égale à celle de base alcaline et que le rapport molaire: (chlorure III - base alcaline)/acide II soit au plus égal à 0,5, de préférence égal à environ 0,2. Le chlorure (III) doit en outre être toujours introduit en dernier. L'ordre d'introduction des autres réactifs n'est pas critique, mais on préfère les introduire dans l'ordre suivant : (II), (I), base alcaline.

Comme base alcaline, on utilise de préférence l'hydroxyde de sodium, mais on peut également utiliser d'autres bases telles que, par exemple, l'hydroxyde de potassium, le carbonate ou le bicarbonate de sodium ou de potassium. La base alcaline peut être ajoutée telle quelle, mais on l'introduit de préférence sous forme d'une solution dans un alcool inférieur $C_1$ -$C_4$, par exemple le méthanol.

L'addition finale du composé (III) entraîne la formation rapide, souvent immédiate, d'un précipité de chlorure alcalin qu'il suffit de séparer pour obtenir la composition selon l'invention. Cette séparation peut être effectuée par tout moyen connu, par exemple par filtration, centrifugation, soutirage ou extraction à l'eau.

Comme dans les compositions de la technique antérieure, la teneur en matière tensio-active des compositions obtenues selon l'invention peut varier dans de larges limites. Cette teneur est généralement faible (de 0,01 à 1 % en poids) dans les compositions de démouillage prêtes à l'emploi, mais elle peut atteindre jusqu'à 30 % en poids dans des compositions concentrées qu'il suffit de diluer pour l'opération de démouillage.

Comme dans les compositions de la technique antérieure, le solvant peut être un chlorofluorocarbure, en particulier le 1,1,2-trichloro-1,2,2-trifluoroéthane connu sous la désignation CFC 113. Cependant, la formulation spécifique de la matière tensio-active selon l'invention permet l'utilisation d'autres solvants que les CFC. Ainsi, à titre non limitatif, on peut utiliser :

- des hydrochlorofluorocarbures de la série de l'éthane ou du propane tels que, par exemple, le 1,1-dichloro-1-fluoroéthane (HCFC 141b), le 1,1-dichloro-2,2,2-trifluoroéthane (HCFC 123), le 1,1-dichloro-2,2,3,3,3-pentafluoropropane (HCFC 225 ca) ou le 1,2-dichloro-1,2,3,3,3-pentafluoropropane (HCFC 225 cb) ;
- des solvants chlorés tels que, par exemple, le chlorure de méthylène, le 1,2-dichloroéthane, le 1,1,1-trichloroéthane, le trichloroéthylène, le 1,2-dichloroéthylène (cis ou trans) ;
- des éthers fluorés tels que, par exemple, le 2,2,3,3,3-pentafluoropropyl méthyl éther, le 2,2,3,3,3-pentafluoropropyl difluorométhyl éther, le 2,2,3,3-tétrafluoropropyl méthyl éther, le 1,1,2,3,3,3-hexafluoropropyl méthyl éther et le 1-chloro1,2,2-trifluoroéthyl difluorométhyl éther ;
- des mélanges de ces solvants entre eux ou avec des hydrocarbures saturés ou non tels que, par exemple, les (perfluoroalkyl)éthylènes mentionnés dans la demande de brevet EP 443911, les fluoroalcanes tertiaires mentionnés dans le brevet US 5 059 728 et le 1,1,1,2,3,4,4,5,5,5-décafluoropentane.

Le solvant est de préférence choisi parmi les composés ininflammables. D'autre part, dans le cas de mélanges de solvants, on préfère utiliser les mélanges azéotropiques ou pseudo-azéotropiques.

La réaction de l'acide (II) avec l'amine fluorée (I) et le chlorure (III) conformément au procédé selon l'invention conduit à une solution comprenant 0,5 à 0,7 mole de composé(s) de formule :

$$(RO)_p(HO)_{2-p}PO_2^{\ominus}\quad \overset{\displaystyle R^1\ \ \ \ }{\overset{\backslash\ \oplus}{\underset{\underset{\displaystyle R^2}{/}}{NH\text{-}X\text{-}R_F}}} \qquad (IV)$$

0,5 à 0,3 mole de composé(s) de formule :

$$(RO)_p(HO)_{2-p}PO_2^{\ominus}\quad R'_2\overset{\oplus}{N}R''_2 \qquad (V)$$

et de 0 à 0,5 mole de chlorure (III) par mole de composé s (IV) et (V).

Parmi les compositions obtenues selon l'invention, on préfère plus particulièrement celles dans lesquelles les composés (IV) et (V) sont présents en proportion sensiblement équimolaire et dont la teneur en composés (III) est comprise entre 0,1 et 0,5 mole, de préférence environ 0,2 mole, par mole de composés (IV) et (V).

Les amines fluorées (I), les acides alkylphosphoriques (II) et les chlorures d'ammonium quaternaire (III), utilisables

pour la préparation des compositions selon l'invention, sont les mêmes que ceux décrits dans le brevet FR 2 522 007 dont le contenu est incorporé ici par référence.

Comme dans le brevet précité, on préfère utiliser:

- les amines fluorées de formule :

$$R_FC_2H_4SO_2NHCH_2CH_2CH_2N(CH_3)_2$$

ou

$$R_FC_2H_4CONHCH_2CH_2CH_2N(CH_3)_2,$$

- les acides (II) dans lesquels R est un radical butyle, hexyle, 2-éthylhexyle, octyle ou tridécyle et, plus particulièrement les mélanges d'acide monoalkylphosphorique et d'acide dialkylphosphorique dont la proportion pondérale des deux acides est comprise entre environ 60/40 et 40/60,
- les chlorures d'ammonium quatemaire (III) dans lesquels R' est un radical dodécyle ou octadécyle et R" est un radical méthyle, ou les produits commerciaux contenant majoritairement ces chlorures.

Les surfaces solides desquelles l'eau peut être éliminée au moyen des compositions selon l'invention peuvent être très diverses, pourvu cependant que leur substance (verre, métal, matière réfractaire, matière plastique,...) soit insoluble dans et inattaquable par le solvant aliphatique halogéné de la composition selon l'invention.

Bien qu'elles soient plus particulièrement destinées au démouillage, les compositions selon l'invention peuvent également être utilisées pour le dégraissage de surfaces solides.

L'aptitude au désémulsionnement des compositions selon l'invention peut être appréciée au moyen du test suivant :

50 ml de composition dont la teneur en matière tensio-active (c'est-à-dire la teneur en matière sèche) a été amenée à 0,4 g/kg sont énergiquement agités avec 20 ml d'eau pendant 30 secondes dans une éprouvette graduée, puis on laisse l'émulsion au repos et on note en fonction du temps le volume des deux phases parfaitement limpides.

Les exemples suivants illustrent l'invention sans la limiter. Ils ont été effectués avec des produits commerciaux, à savoir:

- <u>acide butylphosphorique</u> $(C_4H_9O)_{1,5}(OH)_{0,5}PO_2H$
  présentant les indices d'acidité suivants :

  acidité forte : 0,566 équivalent pour 100 g
  acidité faible : 0,276 équivalent pour 100 g

  ce qui correspond à un mélange contenant environ 40 % d'acide monobutylphosphorique et 60 % d'acide dibutylphosphorique.
- <u>Noramium M2C</u> : mélange de différents homologues de formule :

$$R'_2N^{\oplus}(CH_3)_2\ Cl^{\ominus}$$

dont la répartition des chaînes grasses (R') est la suivante :

| | |
|---|---|
| $C_8$ | 3% |
| $C_{10}$ | 6% |
| $C_{12}$ | 56 % |
| $C_{14}$ | 18 % |
| $C_{16}$ | 10 % |
| $C_{18}$ saturé | 2 % |
| $C_{18}$ insaturé | 5 % |

Ce produit commercial est à 75 % de matière active et contient 0,161 équivalent chlorure pour 100 g.

**EXEMPLE 1 (Comparatif)**

On prépare une composition de démouillage selon l'exemple 7 du brevet FR 2 522 007 en mélangeant dans 150 g de CFC 113 8,32 g de Noramium M2C (soit 13,4 méq $Cl^-$), 2,69 g d'acide butylphosphorique (soit 15,2 méq.) et 7,82 g (soit 15,2 méq.) d'amine fluorée $C_6F_{13}C_2H_4SO_2NHCH_2CH_2CH_2N(CH_3)_2$.

Après 10 heures de repos et filtration, on recueille 4,2 g de précipité identifié comme étant le chlorhydrate de l'amine fluorée.

Le filtrat est ensuite dilué à l'aide de CFC 113 pour amener sa teneur en matière sèche à 0,4 g/kg et soumis au test de désémulsionnement décrit ci-dessus. On a obtenu les résultats suivants :

| **DUREE** | **VOLUME (en ml) DES PHASES LIMPIDES** | |
|---|---|---|
| (en minutes) | Phase inférieure | Phase supérieure |
| 3 | 43 | 14 |
| 5 | 47 | 19 |
| 10 | 50 | 20 |

**EXEMPLE 2**

Dans 150 g de CFC 113, on ajoute successivement et sous agitation :

- 2,69 g d'acide butylphosphorique
- 3,91 g (soit 7,6 méq.) de la même amine fluorée qu'à l'exemple 1
- 3 g d'une solution méthanolique à 10 % d'hydroxyde de sodium (soit 7,6 méq.NaOH)
- 8,32 g de Noramium M2C

Cette dernière addition provoque la formation immédiate d'un précipité de chlorure de sodium qu'on élimine par filtration (poids de NaCl recueilli : 0,4 g).

Soumis au test de désémulsionnement dans les mêmes conditions que précédemment, le filtrat conduit aux résultats suivants :

| **DUREE** | **VOLUME (en ml) DES PHASES LIMPIDES** | |
|---|---|---|
| (en minutes) | Phase inférieure | Phase supérieure |
| 1 | 49 | 11 |
| 2 | 50 | 20 |

**EXEMPLE 3:(Comparatif)**

On opère comme à l'exemple 1, mais en remplaçant le CFC 113 par la même quantité de HCFC 141b.

On recueille 2,5 g de chlorhydrate d'amine fluorée et le filtrat, soumis au test de désémulsionnement, donne les résultats suivants :

| **DUREE** | **VOLUME (en ml) DES PHASES LIMPIDES** | |
|---|---|---|
| (en minutes) | Phase inférieure | Phase supérieure |
| 3 | 30 | 2 |
| 5 | 36 | 5 |
| 10 | 43 | 13 |

**EXEMPLES 4 à 6**

On répète l'exemple 2, mais en remplaçant le CFC 113 par le même poids de HCFC 141b et en faisant varier la quantité de Noramium M2C, à savoir:

- Exemple 4: 9,46 g (soit 15,2 méq.$Cl^-$)
- Exemple 5 : 4,73 g (soit 7,6 méq.$Cl^-$)
- Exemple 6: 7 g (soit 11,25 méq.$Cl^-$)

Après élimination du précipité de chlorure de sodium (poids recueilli: 0,4 g dans chaque cas), le filtrat est dilué et soumis au test de désémulsionnement. On obtient les résultats suivants :

| DUREE | VOLUME (ml) DES PHASES LIMPIDES | | | | | |
|---|---|---|---|---|---|---|
| (en mn) | Phase inférieure | | | Phase supérieure | | |
| | Ex.4 | Ex.5 | Ex.6 | Ex.4 | Ex.5 | Ex.6 |
| 3 | 44 | 42 | 41 | 11 | 2 | 5 |
| 5 | 48 | 45 | 45 | 18 | 7 | 10 |
| 8 | 50 | - | - | 20 | - | - |
| 10 | - | 49 | 50 | - | 19 | 20 |

**EXEMPLE 7**

Dans 150 g de HCFC 225ca, on ajoute successivement et sous agitation :

- 2,69 g d'acide butylphosphorique
- 3,91 g de la même amine fluorée qu'à l'exemple 1
- 3 g d'une solution méthanolique à 10 % d'hydroxyde de sodium
- 7 g de Noramium M2C.

Pour éliminer le chlorure de sodium formé, le mélange est additionné avec 50 ml d'eau, agité pendant 10 minutes et laissé décanter. La décantation s'effectue rapidement et la solution concentrée d'additif tensio-actif est soutirée.

Quand cette solution est soumise au test de désémulsionnement, on obtient en seulement une minute la séparation complète des phases inférieure (50 ml) et supérieure (20 ml).

**EXEMPLE 8**

Dans les bacs de démouillage et de décantation d'une machine de séchage de 33 litres de capacité, on charge 22 litres d'une solution préparée par dilution avec du HCFC 141b d'une composition selon l'exemple 6 (teneur en matière tensio-active : 0,4 g/kg) et 11 litres de HCFC 141b pur dans la cuve de rinçage.

Une grille inox humide, provenant d'un traitement préalable de lessivage et rinçage en milieu aqueux, est plongée dans le bac de démouillage pendant 3 minutes, puis rincée pendant 3 minutes dans le HCFC 141b pur à l'ébullition.

L'évaluation de la performance de séchage a été effectuée de la façon suivante :

La grille est ensuite immergée dans 100 g d'éthanol absolu dont la teneur en eau a préalablement été déterminée par la méthode Karl-Fisher. Un nouveau dosage effectué après immersion de la grille ne révèle aucune augmentation de la teneur en eau, ce qui signifie que la composition selon l'invention permet d'obtenir une élimination complète de l'eau.

**EXEMPLE 9**

Dans une machine à ultrasons d'une capacité totale de 5 litres, on introduit 1,5 litre de la composition de l'exemple 6, diluée à 0,4 g/kg, dans la cuve de dégraissage et 3 litres de HCFC 141b pur dans la cuve de rinçage, qui déborde dans la cuve de dégraissage. L'ensemble est mis à reflux. Des plaques d'aluminium (5x2 cm), enduites au chiffon de graisse EQUATEUR (Société LUBREFOR S.A.), sont plongées pendant 3 minutes dans la cuve contenant la solution d'additif, puis rincées pendant 1 minute dans la cuve de rinçage.

Après séchage à l'air, la qualité du dégraissage est appréciée par la mesure de l'angle de contact d'une goutte d'eau sur la plaque métallique. Le tableau ci-dessous rassemble les résultats.

| | Angle de contact |
|---|---|
| plaque étalon | 10° |
| plaque grasse | 85° |

(suite)

| | Angle de contact |
|---|---|
| plaque nettoyée avec 141b seul | 53° |
| plaque nettoyée avec la composition de l'exemple 6 dilué à 0,4 g/kg | 25° |

Avant le dépôt de graisse, toutes les plaques d'aluminium ont été nettoyées pendant 20 minutes dans une cuve à ultrasons contenant une solution à 2,5 % de lessive T12 (lessive spéciale aluminium de la Société TECS) chauffée à 60°C, puis rincées successivement dans l'eau courante (20 minutes), dans l'éthanol absolu (deux fois par trempé et une fois par aspersion) et dans du CFC 113. Les plaques ainsi nettoyées et rincées sont considérées comme propres et prises comme étalon.

## Revendications

1. Procédé de préparation d'une composition de démouillage ou de dégraissage constituée essentiellement d'une solution de matière tensio-active dans au moins un solvant aliphatique halogéné liquide à température ambiante et ayant un point d'ébullition n'excédant pas 87°C, caractérisé en ce qu'il consiste à faire réagir, au sein d'un solvant aliphatique halogéné ou d'un mélange de tels solvants, une mole d'un acide mono- ou dialkylphosphorique de formule générale :

$$(RO)_p(HO)_{2-p}PO_2H \qquad (II)$$

dans laquelle p est un nombre allant de 1 à 2 et R désigne un radical alkyle, linéaire ou ramifié, contenant de 1 à 18 atomes de carbone,
avec 0,5 à 0,7 mole d'une amine fluorée de formule générale :

$$R_F\text{-}X\text{-}N\begin{array}{l} R^1 \\ / \\ \\ \backslash \\ R^2 \end{array} \qquad (I)$$

dans laquelle $R^1$ et $R^2$, identiques ou différents, représentent chacun un atome d'hydrogène ou un radical alkyle ou hydroxyalkyle contenant 1 à 4 atomes de carbone, $R_F$ représente un radical perfluoroalkyle, linéaire ou ramifié, contenant de 2 à 20 atomes de carbone et X désigne un groupe de liaison bivalent éventuellement partiellement halogéné,
0,5 à 0,3 mole d'une base alcaline et, en dernier lieu, 0,3 à 1 mole d'un chlorure d'ammonium quaternaire de formule :

$$R'_2N^{\oplus}R''_2\ Cl^{\ominus} \qquad (III)$$

dans laquelle R' désigne un radical alkyle, linéaire ou ramifié, contenant de 6 à 18 atomes de carbone et R" est un radical méthyle ou éthyle,
en proportions telles que le rapport molaire: (amine I + base alcaline)/acide II soit égal à 1, que la quantité molaire de chlorure III soit au moins égale à celle de base alcaline et que le rapport molaire: (chlorure III - base alcaline) /acide II soit au plus égal à 0,5, puis à séparer le chlorure alcalin formé.

2. Procédé selon la revendication 1, dans lequel le solvant aliphatique halogéné est un chlorofluorocarbure, un hydrochlorofluorocarbure, un solvant chloré, un éther fluoré ou un mélange de tels solvants entre eux ou avec un hydrofluorocarbure saturé ou non.

3. Procédé selon la revendication 1 ou 2, dans lequel le solvant aliphatique halogéné est le 1,1,2-trichloro-1,2,2-trifluoroéthane, le 1,1-dichloro-1-fluoroéthane, le 1,1-dichloro-2,2,2-trifluoroéthane ou le 1,1-dichloro-2,2,3,3,3-pentafluoropropane.

4. Procédé selon l'une des revendications 1 à 3 pour la préparation d'une composition dans laquelle la teneur en matière tensio-active est comprise entre 0,01 et 30 % en poids.

5. Procédé selon l'une des revendications 1 à 4, dans lequel les réactifs sont introduits dans l'ordre suivant : (II), (I), base alcaline, (III).

6. Procédé selon l'une des revendications 1 à 5, dans lequel la base alcaline est l'hydroxyde de sodium.

7. Procédé selon l'une des revendications 1 à 6, dans lequel le chlorure alcalin formé est séparé par filtration, centrifugation, soutirage ou extraction à l'eau.

8. Procédé selon l'une des revendications 1 à 7, dans lequel on utilise un mélange d'acide monoalkylphosphorique et d'acide dialkylphosphorique dont la proportion pondérale est comprise entre environ 60/40 et 40/60.

9. Procédé selon l'une des revendications 1 à 8, dans lequel l'amine fluorée est choisie parmi les amines de formules :

$$R_FC_2H_4SO_2NHCH_2CH_2CH_2N(CH_3)_2$$

ou

$$R_FC_2H_4CONHCH_2CH_2CH_2N(CH_3)_2$$

10. Procédé selon l'une des revendications 1 à 9, dans lequel le chlorure d'ammonium quaternaire est le chlorure de diméthyl didodécyl ammonium ou de diméthyl dioctadécyl ammonium.

11. Procédé selon l'une des revendications 1 à 10, dans lequel le rapport molaire : (chlorure III - base alcaline)/acide II est égal à environ 0,2.

## Patentansprüche

1. Verfahren zur Herstellung einer Zusammensetzung zum Entfeuchten oder Entfetten, die im wesentlichen aus einer Lösung eines oberflächenaktiven Stoffes in mindestens einem bei Umgebungstemperatur flüssigen, halogenierten aliphatischen Lösungsmittel besteht und einen Siedepunkt von nicht mehr als 87°C aufweist, dadurch gekennzeichnet, daß man in einem halogenierten aliphatischen Lösungsmittel oder einer Mischung solcher Lösungsmittel ein Mol einer Mono- oder Dialkylphosphorsäure der allgemeinen Formel (II)

$$(RO)_p(HO)_{2-p}PO_2H \qquad (II)$$

wobei p eine Zahl von 1 bis 2 ist und R einen linearen oder verzweigten Alkylrest mit 1 bis 18 Kohlenstoffatomen bezeichnet,
mit 0,5 bis 0,7 Mol eines fluorierten Amins der allgemeinen Formel (I)

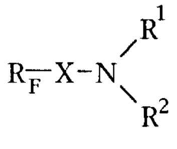

(I)

wobei $R^1$ und $R^2$, identisch oder verschieden, jeweils ein Wasserstoffatom oder einen Alkyl- oder Hydroxylalkylrest

mit 1 bis 4 Kohlenstoffatomen darstellen, $R_F$ einen linearen oder verzweigten Perfluoralkylrest mit 2 bis 20 Kohlenstoffatomen darstellt und X eine divalente, gegebenenfalls partiell halogenierte Bindungsgruppe bezeichnet, 0,5 bis 0,3 Mol einer Alkalibase und schließlich 0,3 bis 1 Mol eines quaternären Ammoniumchlorids der Formel (III)

$$R'_2\overset{\oplus}{N}R''_2\ Cl^{\ominus} \qquad \text{(III)}$$

wobei R' einen linearen oder verzweigten Alkylrest mit 6 bis 18 Kohlenstoffatomen bezeichnet und R" ein Methyl- oder Ethylrest ist,
in solchen Mengen reagieren läßt, daß das Molverhältnis von (Amin(I) + Alkalibase)/Säure (II) gleich 1 ist, die molare Menge an Chlorid (III) mindestens gleich der Menge an Alkalibase ist und das Molverhältnis von (Chlorid (III) - Alkalibase)/Säure (II) höchstens gleich 0,5 ist, und man anschließend das gebildete Alkalichlorid abtrennt.

2. Verfahren nach Anspruch 1, bei dem das halogenierte aliphatische Lösungsmittel ein Fluorchlorkohlenstoff, ein Fluorchlorkohlenwasserstoff, ein chloriertes Lösungsmittel, ein fluorierter Ether oder eine Mischung solcher Lösungsmittel untereinander oder mit einem gesättigten oder ungesättigten Kohlenwasserstoff darstellt.

3. Verfahren nach Anspruch 1 oder 2, bei dem das halogenierte aliphatische Lösungsmittel 1,1,2-Trichlor-1,2,2-trifluorethan, 1,1-Dichlor-1-fluorethan, 1,1-Dichlor-2,2,2-trifluorethan oder 1,1-Dichlor-2,2,3,3,3-pentafluorpropan ist.

4. Verfahren nach einem der Ansprüche 1 bis 3 zur Herstellung einer Zusammensetzung, in welcher der Gehalt an oberflächenaktivem Stoff zwischen 0,01 und 30 Gew.-% liegt.

5. Verfahren nach einem der Ansprüche 1 bis 4, bei dem die Reagenzien in folgender Reihenfolge zugesetzt werden: (II), (I), Alkalibase, (III).

6. Verfahren nach einem der Ansprüche 1 bis 5, bei dem die Alkalibase Natriumhydroxid ist.

7. Verfahren nach einem der Ansprüche 1 bis 6, bei dem das gebildete Alkalichlorid mittels Filtration, Zentrifugieren, Entnahme oder Extraktion mit Wasser abgetrennt wird.

8. Verfahren nach einem der Ansprüche 1 bis 7, bei dem man eine Mischung aus Monoalkylphosphorsäure und Dialkylphosphorsäure mit einem Gewichtsverhältnis zwischen etwa 60/40 und 40/60 verwendet.

9. Verfahren nach einem der Ansprüche 1 bis 8, bei dem das fluorierte Amin aus Aminen der Formeln

$$R_FC_2H_4SO_2NHCH_2CH_2CH_2N(CH_3)_2$$

oder

$$R_FC_2H_4CONHCH_2CH_2CH_2N(CH_3)_2$$

ausgewählt ist.

10. Verfahren nach einem der Ansprüche 1 bis 9, bei dem das quaternäre Ammoniumchlorid Dimethyldidocecylammoniumchlorid oder Dimethyldioctadecylammoniumchlorid ist.

11. Verfahren nach einem der Ansprüche 1 bis 10, bei dem das Molverhältnis von (Chlorid (III) - Alkalibase)/säure (II) etwa 0,2 beträgt.

## Claims

1. Process for preparing a dewetting or degreasing composition composed essentially of a solution of surface-active material in at least one halogenated aliphatic solvent which is liquid at room temperature and which has a boiling

point not exceeding 87°C, characterized in that it consists in reacting, in a halogenated aliphatic solvent or a mixture of such solvents, one mol of a mono- or dialkylphosphoric acid of general formula:

$$(RO)_p(HO)_{2-p}PO_2H \qquad (II)$$

in which p is a number ranging from 1 to 2 and R denotes a linear or branched alkyl radical containing from 1 to 18 carbon atoms,
with 0.5 to 0.7 mol of a fluorinated amine of general formula:

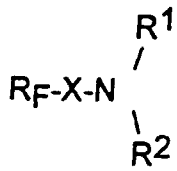

(I)

in which $R^1$ and $R^2$, which are identical or different, each represent a hydrogen atom or an alkyl or hydroxyalkyl radical containing 1 to 4 carbon atoms, $R_F$ represents a linear or branched perfluoroalkyl radical containing from 2 to 20 carbon atoms and X denotes an optionally partially halogenated, divalently-bonded group,
0.5 to 0.3 mol of an alkaline base and, lastly, 0.3 to 1 mol of a quaternary ammonium chloride of formula:

$$R'_2\overset{\oplus}{N}R''_2 \ \overset{\ominus}{Cl} \qquad (III)$$

in which R' denotes a linear or branched alkyl radical containing from 6 to 18 carbon atoms and R" is a methyl or ethyl radical,
in proportions such that the molar ratio: (amine I + alkaline base)/acid II is equal to 1, that the molar amount of chloride III is at least equal to that of alkaline base and that the molar ratio: (chloride III - alkaline base)/acid II is at most equal to 0.5, and in then separating off the alkaline chloride formed.

**2.** Process according to Claim 1, in which the halogenated aliphatic solvent is a chlorofluorocarbon, a hydrochlorofluorocarbon, a chlorinated solvent, a fluorinated ether or a mixture of such solvents with each other or with a saturated or unsaturated hydrofluorocarbon.

**3.** Process according to Claim 1 or 2, in which the halogenated aliphatic solvent is 1,1,2-trichloro-1,2,2trifluoroethane, 1,1-dichloro-1-fluoroethane, 1,1-dichloro-2,2,2-trifluoroethane or 1,1-dichloro-2,2,3,3,3-pentafluoropropane.

**4.** Process according to one of Claims 1 to 3, for the preparation of a composition in which the content of surface-active material is between 0.01 and 30% by weight.

**5.** Process according to one of Claims 1 to 4, in which the reagents are introduced in the following order: (II), (I), alkaline base, (III).

**6.** Process according to one of Claims 1 to 5, in which the alkaline base is sodium hydroxide.

**7.** Process according to one of Claims 1 to 6, in which the alkaline chloride formed is separated off by filtering, centrifuging, decanting or extracting with water.

**8.** Process according to one of Claims 1 to 7, in which a mixture of monoalkylphosphoric acid and dialkylphosphoric acid is used in which the proportion by weight is between approximately 60/40 and 40/60.

**9.** Process according to one of Claims 1 to 8, in which the fluorinated amine is chosen from the amines of formulae:

$$R_FC_2H_4SO_2NHCH_2CH_2CH_2N(CH_3)_2$$

or

$$R_FC_2H_4CONHCH_2CH_2CH_2N(CH_3)_2$$

**10.** Process according to one of Claims 1 to 9, in which the quaternary ammonium chloride is dimethyldidodecylammonium or dimethyldioctadecylammonium chloride.

**11.** Process according to one of Claims 1 to 10, in which the molar ratio: (chloride III - alkaline base)/ acid II is equal to approximately 0.2.